# EUROPÄISCHE PATENTSCHRIFT

(11) **EP 3 498 080 B1**
(45) Veröffentlichungstag und Bekanntmachung des Hinweises auf die Patenterteilung: **17.08.2022**
(21) Anmeldenummer: 18200321.0
(22) Anmeldetag: 15.10.2018
(51) Int. Cl.: A01F 29/09, A01F 29/22, A01D 43/08, G01B 7/14

(54) **FELDHÄCKSLER**
FORAGE HARVESTER
RAMASSEUSE-HACHEUSE

(30) Priorität: 13.12.2017 DE 102017129778
(43) Veröffentlichungstag der Anmeldung: 19.06.2019
(73) Patentinhaber: CLAAS Selbstfahrende Erntemaschinen GmbH, 33428 Harsewinkel (DE)
(72) Erfinder: Neitemeier, Dennis, 59510 Lippetal (DE); Heitmann, Christoph, 48231 Warendorf (DE); Huster, Jochen, 33330 Gütersloh (DE); Brune, Markus, 33428 Harsewinkel (DE); Kettelhoit, Boris, 33335 Gütersloh (DE)
(74) Vertreter: CLAAS Gruppe

(56) Entgegenhaltungen:
- EP-A1- 3 363 281
- EP-A2- 0 943 888
- DE-A1-102014 218 408
- US-A- 4 198 006
- US-A1- 2015 323 301

## Beschreibung

Die vorliegende Erfindung betrifft einen Feldhäcksler umfassend eine Schneidschärfendetektionseinrichtung zur Erfassung eines Schneidschärfegrads eines Häckselwerks zur Zerkleinerung eines Erntegutstroms gemäß dem Oberbegriff von Anspruch 1.

Der in Rede stehende Feldhäcksler ist mit einem Häckselwerk ausgestattet, das eine Messertrommel mit daran angeordneten, länglichen Häckselmessern sowie eine ortsfeste Gegenschneide aufweist. Das der Häckseltrommel zugeführte Erntegut wird durch das Zusammenwirken zwischen den Häckselmessern und der Gegenschneide gehäckselt, also zerkleinert.

Während des Häckselbetriebs kommt es zu einem Verschleiß des Häckselwerks, der auf einen Verschleiß der Häckselmesser zurückgeht. Im Einzelnen kommt es zu einem verschleißbedingten Abtrag im Bereich der Schneidkanten der Häckselmesser, was zu einer Herabsetzung von Schnittqualität und Erntegutdurchsatz führt.

Durch den Verschleiß im Bereich der Schneidkanten der Häckselmesser ergibt sich einerseits eine Änderung der Schneidkantengeometrie und andererseits eine Vergrößerung des Eingriffsspalts zwischen Schneidkante und Gegenschneide. Die Schneidkantengeometrie lässt sich nur durch ein Nachschleifen der Häckselmesser wiederherstellen, während der Eingriffsspalt zwischen Schneidkante und Gegenschneide regelmäßig durch ein Zustellen der Gegenschneide nachgeführt werden kann. Beide Maßnahmen lassen sich bei heutigen Feldhäckslern automatisch und ohne Werkstattaufenthalt vornehmen, müssen allerdings zum richtigen Zeitpunkt ausgelöst werden. Insoweit kommt der genauen Erfassung des Schneidschärfegrads des Häckselwerks besondere Bedeutung zu.

Die bekannte Schneidschärfendetektionseinrichtung zur Erfassung eines Schneidschärfegrads eines Häckselwerks (DE 10 2014 218 408 A1), von der die Erfindung ausgeht, geht auf die grundsätzliche Überlegung zurück, dass der Eingriffsspalt zwischen Häckselmesser und Gegenschneide einen Spalt eines Magnetkreises ausbilden kann, so dass aus der Änderung des Magnetflusses auf den Schneidschärfegrad des betreffenden Häckselmessers geschlossen werden kann. Hierfür ist die Schneidschärfendetektionseinrichtung mit einer Magnetanordnung ausgestattet.

Beim Passieren der Magnetanordnung durch ein Häckselmesser erzeugt die Magnetanordnung einen magnetischen Fluss, der das betreffende Häckselmesser quer zu seiner Längserstreckung durchdringt. Der resultierende magnetische Fluss hängt dabei u.a. von dem Schneidschärfegrad des betreffenden Häckselmessers ab, so dass daraus grundsätzlich auf den Schneidschärfegrad geschlossen werden kann.

Die bekannte Schneidschärfendetektionseinrichtung ist insoweit nachteilig, als die Erfassung des Schneidschärfegrads nur eine einzige Messstelle entlang der Längserstreckung des betreffenden Häckselmessers betrifft. Dies kann zu einer Fehleinschätzung des Schneidschärfegrads führen, beispielsweise wenn eine singuläre Fehlstelle des Häckselmessers ausgerechnet an dieser Messstelle vorliegt, das Häckselmesser im Übrigen jedoch verschleißfrei ist. Um eine solche Fehleinschätzung zu vermeiden, müssten mehrere der bekannten Schneidschärfendetektionseinrichtungen entlang der die Magnetanordnung passierenden Häckselmesser angeordnet sein. Dies wäre kostentechnisch nachteilig.

Der Erfindung liegt das Problem zugrunde, den bekannten Feldhäcksler mit Schneidschärfendetektionseinrichtung derart auszugestalten und weiterzubilden, dass die Erfassung des Schneidschärfegrads des Häckselwerks mit einfachen Maßnahmen verbessert wird.

Eine Erfassungsanordnung zur Erfassung eines Verschleisszustandes eines Häckselwerks ist auch aus EP 3363281 A1, einem Dokument gemäss Artikel 54 (3) EPÜ, bekannt. Darin wird ein Feldhäcksler offenbart, von dem sich Anspruch 1 dadurch unterscheidet, dass die Magnetanordnung am Trommelboden oder am Trommelrücken oder an der Trommelrückwand der Gehäusetrommel angeordnet ist.

Das obige Problem wird bei einem Feldhäcksler gemäß dem Oberbegriff von Anspruch 1 durch die Merkmale des kennzeichnenden Teils von Anspruch 1 gelöst.

Bei der erfindungsgemässen Lösung wird zunächst davon ausgegangen, dass die Schneidschärfendetektionseinrichtung eine Magnetanordnung aufweist, die einen magnetischen Fluss erzeugt, sobald eines der Häckselmesser der Messertrommel die Magnetanordnung passiert. Bei einer Drehung der Messertrommel passiert zumindest ein Teil der Häckselmesser die Magnetanordnung zyklisch. Sobald das jeweilige Häckselmesser die Magnetanordnung passiert, wird ein Magnetkreis, der von der Magnetanordnung erregt wird, geschlossen. Der in diesem Magnetkreis resultierende magnetische Fluss hängt von dem Schneidschärfegrad des jeweiligen Häckselmessers ab.

Entsprechend erfasst die Schneidschärfendetektionseinrichtung den Magnetfluss in dem jeweiligen Magnetkreis und ermittelt daraus den Schneidschärfegrad. Der Schneidschärfegrad ergibt sich aus dem verschleißbedingten Abtrag der Schneidkante des jeweiligen Häckselmessers und der damit verbundenen Zunahme der Breite des Spalts zwischen der Schneidkante des Häckselmessers und der Magnetanordnung. Mit zunehmender Spaltbreite ändert sich entsprechend auch eine den Magnetfluss charakterisierende magnetische Messgröße, beispielsweise nimmt entsprechend die Feldstärke in dem jeweiligen Magnetkreis ab. Im Ergebnis lässt sich aus einer Änderung des Magnetflusses auf eine Abnahme des Schneidschärfegrads des jeweiligen Häckselmessers schließen.

Wesentlich für die erfindungsgemässe Lösung ist nun zum Einen die grundsätzliche Überlegung, dass zumindest ein Teil des Magnetflusses des durch das jeweilige Häckselmesser geschlossenen Magnetkreises zumindest über einen Längsabschnitt des jeweiligen Häckselmessers in dem Häckselmesser längsgeführt wird. Anders als aus dem Stand der Technik bekannt, wird der Magnetfluss in dem jeweiligen Häckselmesser also nicht mehr quer geführt, sondern längsgeführt. Die Ermittlung einer Abnahme des Schneidschärfegrads durch die Schneidschärfendetektionseinrichtung betrifft damit den gesamten oben genannten jeweiligen Längsabschnitt des Häckselmessers, so dass eine oben angesprochene singuläre Fehlstelle bei der Bestimmung des Schneidschärfegrads weniger ins Gewicht fällt.

Zum Anderen ist für die erfindungsgemässe Lösung auch wesentlich, dass die Magnetanordnung außerhalb des Materialzuströmbereichs positioniert ist. Der Materialzuströmbereich ist der Bereich in Strömungsrichtung vor der Messertrommel, der von Erntegut eingenommen werden kann, dass dem Wirkbereich von jeweiligem Häckselmesser und Gegenschneide zugeführt wird. Am messertrommelseitigen Ende hat dieser Bereich insbesondere einen Querschnitt, der durch den Querschnitt einer Öffnung definiert ist, die sich bezogen auf die Drehrichtung der Messertrommel von einer Kante der Gehäusetrommel, in der die Messertrommel rotiert, bis zu einer von der Gegenschneide gebildeten Kante erstreckt. Über diesen gesamten Querschnitt bzw. Bereich kann Material des Erntegutstroms der Stelle zugeführt werden, an der die Häckselmesser mit der mindestens einen Gegenschneide bestimmungsgemäß zusammenwirken. Bevorzugt ist der Materialzuströmbereich als der Bereich bzw. Querschnitt definiert, den der Erntegutstrom einnimmt bzw. ausfüllt, wenn er vor Erreichen der Messertrommel zu einer Gutmatte vorgeformt, insbesondere vorgepresst, worden ist. Die Magnetanordnung ist erfindungsgemäss außerhalb dieses Materialzuströmbereichs angeordnet, um einem möglichen Verschleiß der Komponenten der Magnetanordnung durch das noch vergleichsweise grobe Material des Erntegutstroms im Bereich vor dem Häckselwerk vorzubeugen.

Nach der bevorzugten Ausgestaltung gemäß Anspruch 2 ist die Magnetanordnung an einer Stelle positioniert, an der der von Häckselmessern und Gegenschneide zerkleinerte Erntegutstrom vorbeigeführt wird. Die Magnetanordnung kann dabei entweder so angeordnet sein, dass sie mit dem Erntegutstrom nicht in Kontakt kommt, kann aber grundsätzlich auch so angeordnet sein, dass sie mit dem Erntegutstrom in Kontakt kommt, wobei der Erntegutstrom in letzterem Fall an der Magnetanordnung vorbeifließt. Bevorzugt ist die Magnetanordnung aber so positioniert, dass sie außerhalb des Erntegutstroms liegt.

Nach Anspruch 1 weist das Häckselwerk eine die Messertrommel umgebende Gehäusetrommel auf, wobei das zerkleinerte Erntegut in Strömungsrichtung hinter der Gegenschneide zwischen Gehäusetrommel und Messertrommel weggeführt wird. Die Gehäusetrommel bildet dabei einen feststehenden Teil des Häckselwerks, wohingegen die Messertrommel den rotierenden Teil des Häckselwerks bildet. Die Magnetanordnung ist nun bevorzugt außerhalb des Bereichs zwischen Messertrommel und Gehäusetrommel, durch den der Erntegutstrom wie beschrieben weggeführt wird, positioniert (Anspruch 3), da hier ein Verschleiß der Komponenten der Magnetanordnung kaum gegeben ist. Besonders bevorzugt ist die Magnetanordnung außerhalb der Gehäusetrommel positioniert (Anspruch 4), wobei in diesem Fall der Magnetfluss von der Magnetanordnung durch einen entsprechenden Abschnitt der Gehäusetrommel zum jeweiligen Häckselmesser geleitet wird. Grundsätzlich ist es aber auch denkbar, die Magnetanordnung innerhalb des Bereichs zwischen Messertrommel und Gehäusetrommel, durch den der Erntegutstrom weggeführt wird, zu positionieren (Anspruch5), da das Material des Erntegutstroms aufgrund der vorangegangen Zerkleinerung im Wirkbereich von Häckselmessern und Gegenschneide einen erheblich geringeren verschleißenden Einfluss aus die Komponenten der Magnetanordnung hat als das vergleichsweise grobe Material des Erntegutstroms vor dem Häckselwerk.

Nach der weiteren Ausgestaltung gemäß Anspruch 6 kommt die Magnetanordnung mit dem Erntegutstrom vor dessen Zerkleinerung und/oder nach dessen Zerkleinerung nicht in Kontakt. Es ist wie gesagt besonders bevorzugt, wenn die Magnetanordnung überhaupt nicht mit dem Erntegutstrom in Kontakt kommt.

Anspruch 7 definiert besonders bevorzugte Stellen, an denen die Magnetanordnung positioniert werden kann. Beispielsweise kann diese bezogen auf die Drehrichtung der Messertrommel hinter der Gegenschneide positioniert sein. Bezogen auf die Schwerkraftrichtung kann die Magnetanordnung vertikal unterhalb der Gegenschneide positioniert sein.

Nach der bevorzugten Ausgestaltung gemäß Anspruch 8 ist die Gehäusetrommel und/oder der Trommelboden und/oder der Trommelrücken und/oder der Trommelrückwand aus einem nicht-magnetischen Werkstoff, beispielsweise aus Edelstahl, hergestellt. Auf diese Weise beeinflusst das Material der Gehäusetrommel nicht den Magnetfluss, wenn die Magnetanordnung außerhalb der Gehäusetrommel positioniert ist.

Im Folgenden wird die Erfindung anhand einer lediglich Ausführungsbeispiele darstellenden Zeichnung näher erläutert. In der Zeichnung zeigt
- Fig. 1: einen vorschlagsgemäßen Feldhäcksler mit einem Häckselwerk sowie mit einer Schneidschärfendetektionseinrichtung in einer ganz schematischen Darstellung,
- Fig. 2: die Schneidschärfendetektionseinrichtung des Feldhäckslers gemäß Fig. 1 in der Ansicht II-II und
- Fig. 3: die Schneidschärfendetektionseinrichtung gemäß Fig. 2 in der Ansicht III.

Die in der Zeichnung dargestellte Schneidschärfendetektionseinrichtung 1 dient der Erfassung eines Schneidschärfegrads eines Häckselwerks 2, das einem zur Verarbeitung eines Erntegutstroms S vorgesehenen Feldhäcksler 3 zugeordnet ist. Der Feldhäcksler 3 ist hier und vorzugsweise mit einem Erntevorsatz 4 ausgestattet. Der Feldhäcksler 3 weist ferner eine Vorpresseinheit 5 auf, die als Zuführeinrichtung für das Erntegut fungiert. Die Vorpresseinheit 5 ist mit mindestens zwei, hier insgesamt vier, einen Presskanal ausbildenden Vorpresswalzen 7-10 ausgestattet. Dabei übernehmen die vorderen Vorpresswalzen 7,8 eine Vorverdichtung des aufgenommenen Ernteguts, während die hinteren Vorpresswalzen 9,10 eine gleichmäßige Verdichtung und einen Weitertransport des Ernteguts übernehmen. Der Presskanal bildet hier und vorzugsweise den Materialzuströmbereich M, das heißt den Bereich, durch den sich das Material des Erntegutstroms 5 bewegen kann, bevor es im weiteren Verlauf in den Wirkbereich des Häckselwerks 2 gelangt.

Das Häckseln des aufgenommenen Ernteguts wird in dem Häckselwerk 2 vorgenommen, an das sich eine weitere Fördervorrichtung 11 für den Transport des gehäckselten Ernteguts in einen Auswurfkanal 12 anschließt. Das Häckselwerk 2 weist eine Messertrommel 13 mit daran angeordneten, länglichen Häckselmessern 14 sowie mindestens eine, hier und vorzugsweise genau eine, Gegenschneide 15 auf, die für den Häckselprozess mit den Häckselmessern 14 zusammenwirkt. Die Stelle, an der die Häckselmesser 14 mit der Gegenschneide 15 zusammenwirken, ist hier als Wirkbereich definiert.

Die Messertrommel 13 ist hier und vorzugsweise in einer Gehäusetrommel 2a angeordnet, die das Häckselwerk 2 nach außen abschließt. Es handelt sich dabei um ein im weitesten Sinne trommelartiges Gehäuse, welches hier bezogen auf die Schwerkraftrichtung nach unten hin von einem Trommelboden 58, nach oben hin von einem Trommelrücken 59 und nach hinten hin von einer Trommelrückwand 60 gebildet wird.

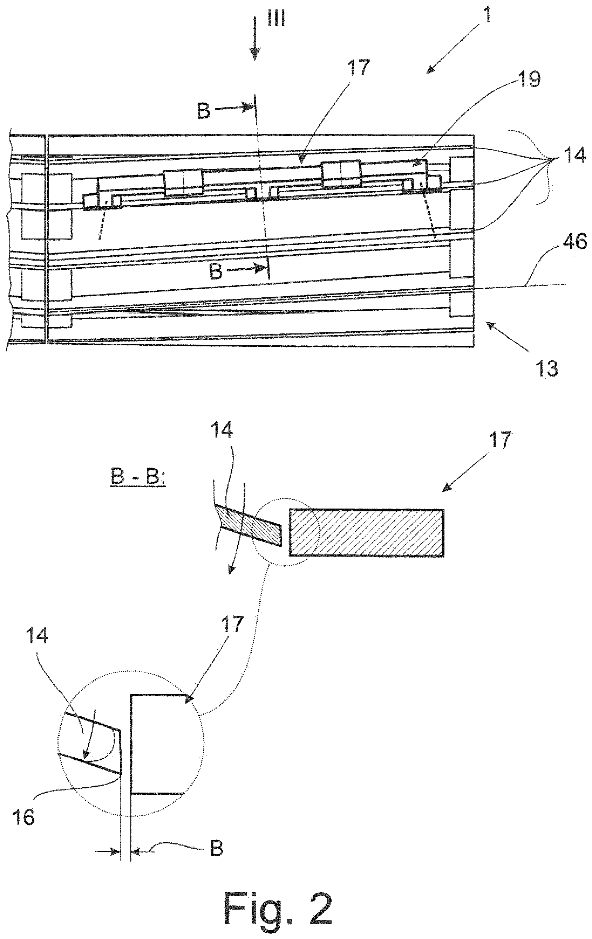

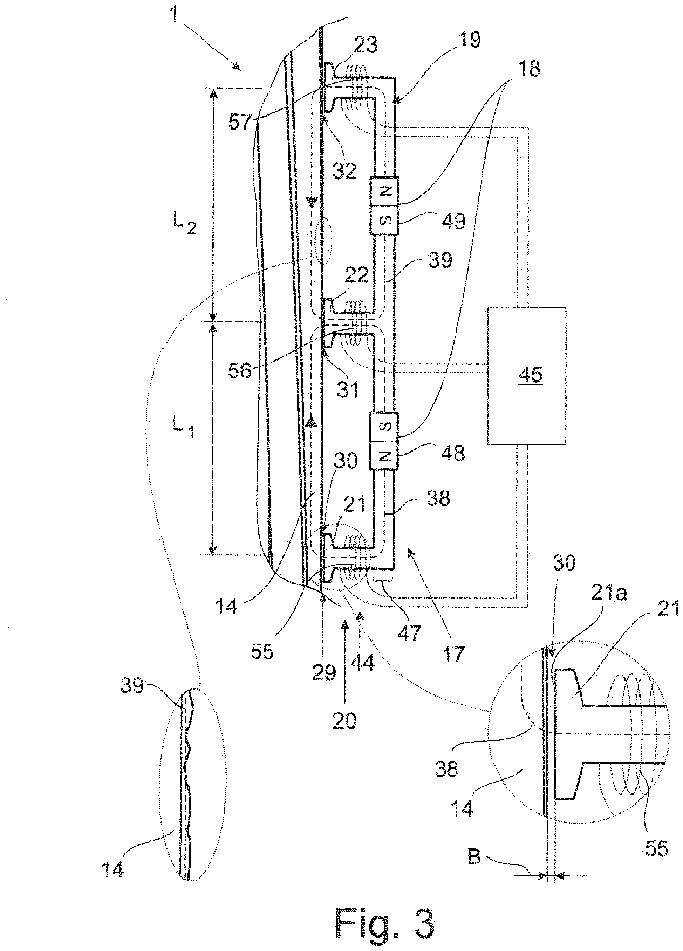

Fig. 2 zeigt in der dortigen Schnittdarstellung B-B den grundsätzlichen Aufbau von Häckselmesser 14 und Gegenschneide 15. Das Häckselmesser 14 weist eine Schneidkante 16 auf, deren Schneidschärfegrad maßgeblich für die erzielbare Schnittqualität ist. Ein möglicher, verschleißbedingter Abtrag der Schneidkante 16 ist in dieser Darstellung gemäß Fig. 2 gestrichelt angedeutet. Der in Fig. 3 linken Detaildarstellung lässt sich entnehmen, dass der verschleißbedingte Abtrag über die Längserstreckung des betreffenden Häckselmessers 14 ungleichmäßig ist.

Die Schneidschärfendetektionseinrichtung 1 weist mindestens eine, hier und vorzugsweise genau eine, Magnetanordnung 17 auf, die hier und vorzugsweise eine magnetische Erregeranordnung 18 und eine mit der Erregeranordnung 18 magnetisch gekoppelte Flussleiteinrichtung 19 aufweist.

Der grundsätzliche Aufbau der Magnetanordnung 17 ergibt sich aus der Darstellung gemäß Fig. 3. Hier und vorzugsweise ist vorgesehen, dass die Magnetanordnung 17 eine gegenüber der Messtrommel 13 feststehende Polanordnung 20 bereitstellt, die mindestens einen magnetischen Pol 21-23 mit einer Polfläche zum Ausleiten von Magnetfluss ausbildet. Eine solche Polfläche ist in Fig. 3 für den Pol 21 beispielhaft mit dem Bezugszeichen 21a versehen worden.

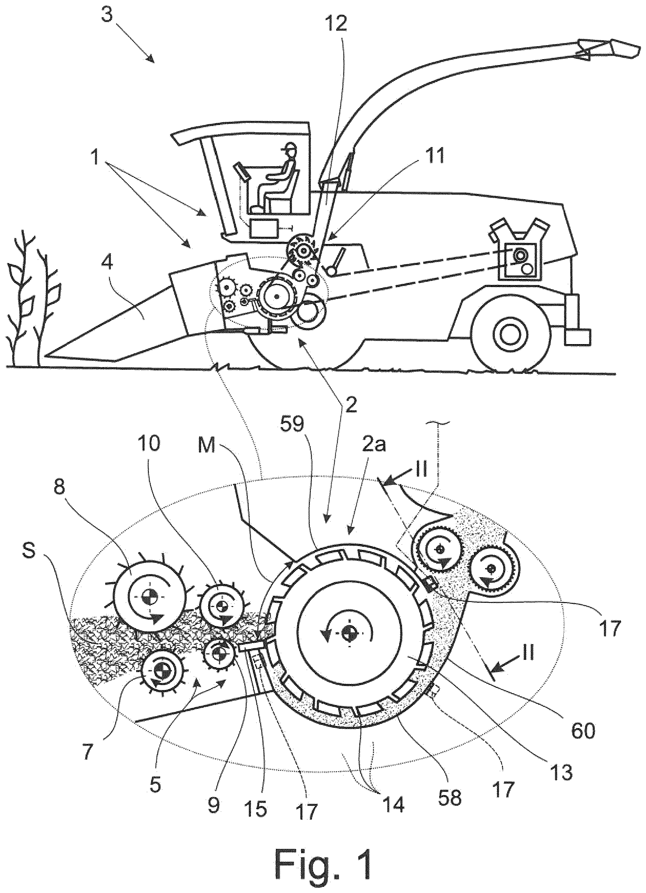

Die Messertrommel 13 des in Fig. 1 gezeigten Feldhäckslers 3 ist axial zweigeteilt und weist in Fahrtrichtung gesehen eine linke Trommelhälfte und eine rechte Trommelhälfte auf. Fig. 2 zeigt die rechte Trommelhälfte. Die linke Trommelhälfte ist analog aufgebaut und auch mit einer vorschlagsgemäßen Schneidschärfendetektionseinrichtung 1 ausgestattet.

Bei einer Drehung der Messertrommel 13 passiert zumindest ein Teil der Häckselmesser 14, hier die Häckselmesser 14 der rechten Trommelhälfte, die Polanordnung 20. Dabei bildet das die Polanordnung 20 jeweils passierende Häckselmesser 14 kurzzeitig eine Luftspaltanordnung 29 mit mindestens einem Luftspalt 30-32 zu der Polanordnung 20 hin aus. Fig. 3 zeigt weiter, dass dadurch mindestens ein von der Erregeranordnung 18 erregter Magnetkreis 38, 39 über das jeweilige Häckselmesser 14 geschlossen wird. Angesichts der Tatsache, dass der resultierende Magnetfluss in dem jeweiligen Magnetkreis 38, 39 bei vorgegebener magnetischer Erregung von der Geometrie und Breite B des jeweiligen Luftspalts 30-32 abhängt, wird mit einem Blick auf die Darstellung gemäß Fig. 2 klar, dass sich basierend auf dem resultierenden magnetischen Fluss der Schneidschärfegrad des jeweiligen Häckselmessers 14 ermitteln lässt.

Im einfachsten Fall repräsentiert die Veränderung des magnetischen Flusses, ggf. der weiter unten angesprochenen, ersten Ableitung des magnetischen Flusses im Zeitbereich, gegenüber der Situation mit verschleißfreiem Häckselmesser 14 den Schneidschärfegrad. Der Wert für diese Veränderung repräsentiert damit den Schneidschärfegrad. Es ist aber auch denkbar, dass aus der mindestens einen ermittelten magnetischen Messgröße ein Wert für die verschleißbedingte Breite mindestens eines Luftspalts 30-32 der Luftspaltanordnung 29 oder die verschleißbedingte Geometrie der Schneidkante 16 des betreffenden Häckselmessers 14 berechnet wird, was dann ebenfalls den Schneidschärfegrad repräsentiert.

Hier und vorzugsweise weist die vorschlagsgemäße Schneidschärfendetektionseinrichtung 1 eine Messanordnung 44 und eine Auswerteeinheit 45 auf, wobei die Messanordnung 44 ganz allgemein mindestens eine magnetische Messgröße betreffend den Magnetfluss in mindestens einem von der Erregeranordnung 18 erregten Magnetkreis 38, 39 erfasst und wobei die Auswerteeinheit 45, ebenfalls ganz allgemein, aus der mindestens einen erfassten Messgröße den Schneidschärfegrad des jeweiligen Häckselmessers 14 ermittelt. Wie dies im Einzelnen stattfindet, wird weiter unten erläutert.

Wesentlich ist hier zum Einen, dass zumindest ein Teil des von der magnetischen Erregeranordnung 18 erzeugten Magnetflusses zumindest über einen Längsabschnitt L₁, L₂ des die Magnetanordnung 17 bzw. die Polanordnung 20 passierenden Häckselmessers 14, vorzugsweise über die gesamte Länge des die Magnetanordnung 17 bzw. die Polanordnung 20 passierenden Häckselmessers 14, in dem Häckselmesser 14 längsgeführt wird. Der grundsätzliche Verlauf des Magnetflusses ergibt sich in der Zeichnung aus der Darstellung des jeweils zugehörigen Magnetkreises 38, 39.

Der Begriff "längs" ist im Zusammenhang mit den Häckselmessern 14 stets bezogen auf die längliche Ausgestaltung der Häckselmesser 14. Insoweit ist der Begriff "längs" auf die Längserstreckung der Häckselmesser 14 bezogen, die in Fig. 2 beispielhaft mit dem Bezugszeichen 46 versehen worden ist.

In einer besonders bevorzugten Ausgestaltung weist die Polanordnung 20 mindestens zwei längs des die Polanordnung 20 passierenden Häckselmessers 14 voneinander beabstandete magnetische Pole 21-23 auf, die jeweils einen Luftspalt 30-32 der Luftspaltanordnung 29 zusammen mit dem Häckselmesser 14 ausbilden und zwischen denen der von der magnetischen Erregeranordnung 18 erzeugte Magnetfluss in dem Häckselmesser 14 längsgeführt wird. Dadurch lässt sich der Schneidschärfegrad des Häckselmessers 14 ebenfalls im Längsabschnitt L₁, L₂ zwischen den beiden Polen 21-23 ermitteln. Dies ist in Fig. 3 für insgesamt drei Pole 21-23 gezeigt.

Mit der Lage der Pole 21-23 entlang des jeweils passierenden Häckselmessers 14 lässt sich einstellen, in welchem Bereich der Schneidschärfegrad erfasst werden soll. Es ist auch denkbar, die Magnetanordnung 17 insgesamt so auszulegen, dass der Schneidschärfegrad für unterschiedliche Längsabschnitte L₁, L₂ des betreffenden Häckselmessers 14 separat erfassbar ist. Das lässt sich beispielsweise einfach dadurch realisieren, dass die Flussleiteinrichtung 19 zwei oder mehrere separat voneinander ausgestaltete Abschnitte aufweist.

Die für unterschiedliche Längsabschnitte L₁, L₂ des betreffenden Häckselmessers 14 separate Erfassung des Schneidschärfegrads ist insbesondere sinnvoll, wenn sich der Verschleiß der Häckselmesser 14 über die Längserstreckung der Häckselmesser 14 verändert. Üblicherweise ist es nämlich so, dass der Verschleiß an den Außenseiten der Messertrommel 13 stärker ist als in der Mitte der Messertrommel 13, so dass sich für die Messertrommel 13 entsprechend eine ballige Formgebung ergibt.

Die oben angesprochene Erfassung des Schneidschärfegrads in unterschiedlichen Längsabschnitten Li, L₂ setzt voraus, dass die Polanordnung 20 mindestens drei längs des die Polanordnung 20 passierenden Häckselmessers 14 voneinander beabstandete magnetische Pole 21-23 ausbildet, die jeweils einen Luftspalt 30-32 der Luftspaltanordnung 29 zusammen mit dem die Polanordnung 20 passierenden Häckselmesser 14 ausbilden. Dies ist in Fig. 3 gezeigt. Dabei ist es vorzugsweise so, dass mindestens einer der Pole 21-23, hier und vorzugsweise der Pol 22, Bestandteil zweier von der magnetischen Erregeranordnung 18 erregter Magnetkreise 38,39 ist. Eine Ermittlung des durch die beiden Magnetkreise 38,39 fließenden Magnetflusses gibt also wie oben angesprochen Aufschluss über den Schneidschärfegrad des jeweiligen Häckselmessers 14 in den Längsabschnitten L₁ und L₂.

Ein besonders verlustarmer Aufbau der Magnetkreise 38, 39 ergibt sich dadurch, dass zumindest ein Teil der Pole 21-23, hier und vorzugsweise alle Pole 21-23, der Polanordnung 20 entlang der Schneidkante 16 des die Polanordnung 20 passierenden Häckselmessers 14 angeordnet sind.

Eine konstruktiv leicht umsetzbare Ausgestaltung der Flussleiteinrichtung 19 zeigt wiederum Fig. 3. Hier ist es vorgesehen, dass die Flussleiteinrichtung 19 einen zentralen Abschnitt 47 aufweist, von dem die Pole 21-23 der Polanordnung 20 abzweigen. Dabei ist der zentrale Abschnitt 27 der Flussleiteinrichtung 19 hier und vorzugsweise gerade ausgestaltet. Alternativ oder zusätzlich kann es vorgesehen sein, dass der zentrale Abschnitt 27 der Flussleiteinrichtung 19, wie in Fig. 3 gezeigt, entlang der Schneidkante 16 des die Polanordnung 20 passierenden Häckselmessers 14 verläuft. Dadurch ergibt sich eine insgesamt symmetrische Struktur der Flussleiteinrichtung 19, was die Ermittlung des Schneidschärfegrads des jeweiligen Häckselmessers 14 weiter vereinfacht.

Für die Ausgestaltung der Erregeranordnung 18 sind verschiedene vorteilhafte Varianten denkbar. Hier und vorzugsweise weist die Erregeranordnung 18 mindestens einen Erregermagneten 48, 49 auf, der als Permanentmagnet ausgestaltet ist. Alternativ kann es sich bei dem Erregermagneten 48, 49 auch um einen Elektromagneten handeln. Bei dem in Fig. 3 dargestellten Ausführungsbeispiel sind die Erregermagnete 48, 49 in einem Abschnitt der Flussleiteinrichtung 19, hier in dem zentralen Abschnitt 47 der Flussleiteinrichtung 19, angeordnet.

Die Messanordnung 44 weist hier und vorzugsweise mindestens eine Messeinheit 55-57 zur Erfassung der mindestens einen magnetflussbasierten Messgröße auf. Die Fig. 3 zeigt eine besonders einfache Ausgestaltung der Messeinheiten 55-57. Dabei weist eine Messeinheit 55-57 jeweils eine Spulenanordnung auf, die von dem Magnetfluss in der Flussleiteinrichtung 19 durchflossen wird. Durch die Drehung der Messertrommel 13 wird die oben angesprochene Luftspaltanordnung 29 zyklisch erzeugt und wieder aufgehoben, so dass sich eine entsprechend zyklische Änderung des Magnetflusses im Zeitbereich ergibt in mindestens einem der Magnetkreise 38, 39 ergibt. Dabei erfasst die Messeinheit 55-57 als Messgröße vorzugsweise die in der Spulenanordnung induzierte Spannung. Insoweit entspricht die Messgröße der ersten Ableitung des betreffenden Magnetflusses im Zeitbereich, aus der sich, ggf. mit Bezug auf den verschleißfreien Zustand, ein Wert für den Schneidschärfegrad des betreffenden Häckselmessers 14 ermitteln lässt.

Es wurde weiter oben erläutert, dass sich die von der Messanordnung 44 ermittelte Messgröße in Abhängigkeit vom Schneidschärfegrad ändert. Dies bedeutet, dass sich der Schneidschärfegrad aus der ermittelten Messgröße ableiten lässt. Dies übernimmt die Auswerteeinheit 45, die hierfür in an sich üblicher Weise zumindest einen Mikroprozessor und eine Speichereinheit aufweist. Für die Ermittlung des Schneidschärfegrads sind verschiedene vorteilhafte Varianten denkbar. Im einfachsten Fall ist ein Lernvorgang vorgesehen, in dem die betreffende Messgröße für unterschiedliche Verschleißzustände erfasst und abgespeichert wird. Aus diesen Werten lässt sich ein Kennfeld bilden, das die Basis für die spätere Ermittlung des Schneidschärfegrads, also eines Wertes, das den Schneidschärfegrad repräsentiert, bildet.

Ganz allgemein ist es vorgesehen, dass die Auswerteeinheit 45 aus einem Betrag, insbesondere einem Spitzenwert, der mindestens eine Messgröße, und/oder einem Verlauf der mindestens einen Messgröße, jeweils während einer Drehung der Messertrommel 13, den Schneidschärfegrad des jeweiligen Häckselmessers 14 ermittelt. Durch die Drehung der Messertrommel 13 ergibt sich durch die Bewegung der Häckselmesser 14 eine laufende Veränderung der Magnetflüsse in den jeweiligen Magnetkreisen 38, 39, die von dem Schneidschärfegrad abhängig ist und die über die oben angesprochene, induzierte Spannung leicht erfassbar ist.

Die vorangehend beschriebene Magnetanordnung 17 ist ferner gemäß einem weiteren wesentlichen Aspekt der vorschlagsgemäßen Lösung außerhalb des Materialzuströmbereichs M positioniert. Dies hat den Vorteil, dass die Komponenten der Magnetanordnung 17 keinem oder zumindest keinem nennenswerten Verschleiß durch vorbeiströmendes Material des Erntegutstroms S unterliegen.

Fig. 1 zeigt verschiedene alternative Einbauorte für die in Rede stehende Magnetanordnung 17.

Den gezeigten Alternativen ist gemein, dass die Magnetanordnung 17 an einer Stelle positioniert ist, an der der Erntegutstrom S nach dessen Zerkleinerung in dem Wirkbereich der Häckselmesser 14 und Gegenschneide 15 vorbeigeführt wird. Die Magnetanordnung 17 ist also nicht in dem Bereich vor dem genannten Wirkbereich angeordnet. Auf diese Weise kommt die Magnetanordnung 17 nicht mit dem noch vergleichsweise groben, ungehäckselten Material des Erntegutstroms S in Kontakt, sondern allenfalls mit dem zerkleinerten Material oder mit überhaupt keinem Material.

Gemäß einer besonders bevorzugten Ausgestaltung ist die Magnetanordnung 17, wie Fig. 1 für alle Alternativen der Anordnung zeigt, außerhalb des Bereichs zwischen der Messertrommel 13 und dem Trommelgehäuse 2a, durch den das zerkleinerte Erntegut weggeführt wird, positioniert.

Im Fall der beiden Einbauorte der Magnetanordnung 17 in Fig. 1 rechts der Messertrommel 13 ist die Magnetanordnung 17 jeweils außerhalb des die Messertrommel 13 umgebenden Trommelgehäuses 2a bzw. außerhalb des Trommelbodens 58, Trommelrückens 59 und der Trommelrückwand 60 positioniert.

Im Fall des Einbauorts der Magnetanordnung 17 in Fig. 1 links der Messertrommel 13 ist die Magnetanordnung 17 in Drehrichtung der Messertrommel 13 hinter der Gegenschneide 15, hier und vorzugsweise vertikal unterhalb der Gegenschneide 15, positioniert.

Bei allen in Fig. 1 beispielhaft gezeigten Einbauorten ist gewährleistet, dass die Magnetanordnung 17 mit dem Erntegutstrom S weder vor dessen Zerkleinerung in besagtem Wirkbereich noch nach dessen Zerkleinerung in besagtem Wirkbereich in Kontakt kommt.

Gemäß einer hier nicht dargestellten Alternative ist es aber auch denkbar, dass die Magnetanordnung 17 innerhalb des Bereichs zwischen Messertrommel 13 und Trommelgehäuse 2a, durch den der zerkleinerte Erntegutstrom S weggeführt wird, positioniert ist. Hier kommt die Magnetanordnung 17 zwar mit dem Material des Erntegutstroms S in Kontakt, ist aber nicht so einem hohen Verschleiß ausgesetzt wie in dem Bereich einer Anordnung vor der Zerkleinerung mittels des Häckselwerks, insbesondere vor dem Wirkbereich bzw. innerhalb des Materialzuströmbereichs M.

Wie bereits zuvor erläutert, umfasst das Trommelgehäuse 2a hier und vorzugsweise einen Trommelboden 58, einen Trommelrücken 59 und eine Trommelrückwand 60, wobei die Messertrommel 13 bezogen auf die Schwerkraftrichtung zwischen Trommelboden 58 und Trommelrücken 59 rotiert. Zwischen dem Trommelboden 58 und dem Trommelrücken 59 ist im rückwärtigen Teil des Häckselwerks 2 eine Öffnung vorgesehen, durch die der Erntegutstrom S in einen Auswurfkanal 12 geführt wird. In dem Auswurfkanal 12 können weitere den Erntegutstrom S verarbeitende Einrichtungen wie ein Korncracker vorgesehen sein, die das Erntegut, beispielsweise Maiskörner, insbesondere weiter aufschließen. Dabei ist ein besonders bevorzugter Einbauort der Magnetanordnung 17, wie Fig. 1 zeigt, entweder am Trommelboden 58 oder am Trommelrücken 59.

Hier und vorzugsweise ist die Gehäusetrommel 2a und insbesondere der Trommelboden 58, der Trommelrücken 59 und/oder die Trommelrückwand 60, woran gemäß den beiden Alternativen die Magnetanordnung 17 angeordnet ist, aus einem nicht-magnetischen Werkstoff, beispielsweise Edelstahl, hergestellt. Dies hat den Vorteil, dass das Material der Gehäusetrommel 2a keinen oder zumindest keinen nennenswerten Einfluss auf die Funktionsweise der vorschlagsgemäß verwendeten Schneidschärfendetektionseinrichtung 1 hat.

### Bezugszeichenliste

- 1: Erfassungsanordnung
- 2: Häckselwerk
- 2a: Gehäusetrommel
- 3: Feldhäcksler
- 4: Erntevorsatz
- 5: Vorpresseinheit
- 7-10: Vorpresswalzen
- 11: Fördervorrichtung
- 12: Auswurfkanal
- 13: Messertrommel
- 14: Häckselmesser
- 15: Gegenschneide
- 16: Schneidkante
- 17: Magnetanordnung
- 18: Erregeranordnung
- 19: Flussleiteinrichtung
- 20: Polanordnung
- 21-23: Pole
- 21a: Polfläche
- 29: Luftspaltanordnung
- 30-32: Luftspalt
- 38,39: Magnetkreis
- 44: Messanordnung
- 45: Auswerteeinheit
- 46: Längserstreckung
- 47: Zentraler Abschnitt der Flussleiteinrichtung
- 48, 49: Erregermagnete
- 55-57: Messeinheit
- 58: Trommelboden
- 59: Trommelrücken
- 60: Trommelrückwand
- B: Breite
- Li, L₂: Längsabschnitt
- M: Materialzuströmbereich
- S: Erntegutstrom

## Patentansprüche

1. Feldhäcksler umfassend eine Schneidschärfendetektionseinrichtung (1) zur Erfassung eines Schneidschärfegrads eines Häckselwerks (2) zur Zerkleinerung eines Erntegutstroms (S),
wobei das Häckselwerk (2) eine Messertrommel (13) mit mehreren Häckselmessern (14) sowie mindestens eine Gegenschneide (15) aufweist, die mit den Häckselmessern (14) den Erntegutstrom (S) zerkleinernd zusammenwirkt, wobei der Erntegutstrom (S) dem Häckselwerk (2) über eine Vorpresseinheit (5) zugeführt wird,
wobei der Erntegutstrom (S) von der Vorpresseinheit (5) zu der Stelle, an der die Häckselmesser (14) mit der mindestens einen Gegenschneide (15) den Erntegutstrom (S) zerkleinernd zusammenwirken, einen Materialzuströmbereich (M) definiert,
wobei die Schneidschärfendetektionseinrichtung (1) mittels einer Magnetanordnung (17) mindestens einen Magnetkreis (38, 39) erregt, wobei der jeweilige Magnetkreis (38, 39) bei einer Drehung der Messertrommel (13), sobald eines der Häckselmesser (14) die Magnetanordnung (17) passiert, über das jeweilige Häckselmesser (14) geschlossen wird,
wobei die Schneidschärfendetektionseinrichtung (1) den Magnetfluss in dem jeweiligen Magnetkreis (38, 39) erfasst und basierend auf einer erfassten Änderung einer magnetischen Messgröße betreffend den Magnetfluss eine Abnahme des Schneidschärfegrads des jeweiligen Häckselmessers (14) ermittelt,
wobei die Magnetanordnung (17) außerhalb des Materialzuströmbereichs (M) des Häckselwerks positioniert ist,
wobei das Häckselwerk (2) eine Gehäusetrommel (2a) aufweist, in der die Messertrommel (13) rotiert, wobei der Erntegutstrom (S) nach seiner durch das Zusammenwirken von Häckselmessern (14) und Gegenschneide (15) bewirkten Zerkleinerung zwischen der Messertrommel (13) und der Gehäusetrommel (2a) von der Gegenschneide (15) weggeführt wird,
wobei die Gehäusetrommel (2a) einen Trommelboden (58), einen Trommelrücken (59) und eine Trommelrückwand (60) umfasst, wobei der Erntegutstrom (S) nach seiner Zerkleinerung durch eine zwischen Trommelboden (58) und Trommelrücken (59) vorgesehene Öffnung aus der Gehäusetrommel (2a) in einen Auswurfkanal (12) geführt wird,
**dadurch gekennzeichnet, dass** zumindest ein Teil des Magnetflusses des durch das jeweilige Häckselmesser (14) geschlossenen Magnetkreises (38, 39) zumindest über einen Längsabschnitt (L₁, L₂) des jeweiligen Häckselmessers (14) in dem Häckselmesser längsgeführt wird und die Magnetanordnung (17) am Trommelboden (58) oder am Trommelrücken (59) oder an der Trommelrückwand (60) der Gehäusetrommel (2a) angeordnet ist.

2. Feldhäcksler nach Anspruch 1, **dadurch gekennzeichnet, dass** die Magnetanordnung (17) an einer Stelle positioniert ist, an der der Erntegutstrom (S) nach seiner durch das Zusammenwirken von Häckselmessern (14) und Gegenschneide (15) bewirkten Zerkleinerung vorbeigeführt wird.

3. Feldhäcksler nach Anspruch 1, **dadurch gekennzeichnet, dass** die Magnetanordnung (17) außerhalb des Bereichs zwischen Messertrommel (13) und Gehäusetrommel (2a), durch den der Erntegutstrom (S) nach seiner Zerkleinerung weggeführt wird, positioniert ist.

4. Feldhäcksler nach einem der vorhergehenden Ansprüche, **dadurch gekennzeichnet, dass** die Magnetanordnung (17) außerhalb der die Messertrommel (13) umgebenden Gehäusetrommel (2a) positioniert ist.

5. Feldhäcksler nach einem der Ansprüche 1 bis 2, **dadurch gekennzeichnet, dass** die Magnetanordnung (17) innerhalb des Bereichs zwischen Messertrommel (13) und Gehäusetrommel (2a), durch den der Erntegutstrom (S) nach seiner Zerkleinerung weggeführt wird, positioniert ist.

6. Feldhäcksler nach einem der vorhergehenden Ansprüche, **dadurch gekennzeichnet, dass** die Magnetanordnung (17) mit dem Erntegutstrom (S) vor seiner durch das Zusammenwirken von Häckselmessern (14) und Gegenschneide (15) bewirkten Zerkleinerung und/oder nach seiner durch das Zusammenwirken von Häckselmessern (14) und Gegenschneide (15) bewirkten Zerkleinerung nicht in Kontakt kommt.

7. Feldhäcksler nach einem der vorhergehenden Ansprüche, **dadurch gekennzeichnet, dass** die Magnetanordnung (17) in Drehrichtung der Messertrommel (13) hinter der Gegenschneide (15) und/oder vertikal unterhalb der Gegenschneide (15) positioniert ist.

8. Feldhäcksler nach Anspruch 1, **dadurch gekennzeichnet, dass** die Gehäusetrommel (2a) und/oder der Trommelboden (58) und/oder der Trommelrücken (59) und/oder die Trommelrückwand (60) aus einem nicht-magnetischen Werkstoff hergestellt ist.

## Claims

1. A forage harvester comprising a cutting edge sharpness detection device (1) for detecting a degree of cutting edge sharpness of a cutting assembly (2) for the comminution of a flow of harvested material (S),
wherein the cutting assembly (2) has a knife drum (13) with a plurality of chopping knives (14) as well as at least one counter cutter (15) which cooperates with the chopping knives (14) to comminute the flow of harvested material (S), wherein the flow of harvested material (S) is fed to the cutting assembly (2) via a pre-pressing unit (5),
wherein the flow of harvested material (S) defines a material inflow zone (M) from the pre-pressing unit (5) to the location at which the chopping knives (14) cooperate with the at least one counter cutter (15) to comminute the flow of harvested material,
wherein the cutting edge sharpness detection device (1) activates at least one magnetic circuit (38, 39) by means of a system of magnets (17), wherein the respective magnetic circuit (38, 39) is closed via the respective chopping knife (14) upon a rotation of the knife drum (13) as soon as one of the chopping knives (14) passes the system of magnets (17), wherein the cutting edge sharpness detection device (1) detects the magnetic flux in the respective magnetic circuit (38, 39) and, based on a detected variation in a magnetic parameter concerning the magnetic flux, detects a reduction in the degree of cutting edge sharpness of the respective chopping knife (14), wherein the system of magnets (17) is positioned outside the material inflow zone (M) of the cutting assembly,
wherein the cutting assembly (2) has a housing drum (2a) in which the knife drum (13) rotates wherein, following comminution by cooperation of the chopping knives (14) and counter cutter (15), the flow of harvested material (S) is conveyed away from the counter cutter (15) between the knife drum (13) and the housing drum (2a),
wherein the housing drum (2a) comprises a drum bottom (58), a drum rear (59) and a drum back wall (60) wherein, following its comminution, the flow of harvested material (S) is conveyed out of the housing drum (2a) through an opening provided between the drum bottom (58) and the drum rear (59) into an outflow channel (12),
**characterized in that** at least a portion of the magnetic flux of the magnetic circuit (38, 39) closed by means of the respective chopping knife (14) is guided along at least a longitudinal section (L₁, L₂) of the respective chopping knife (14) in the chopping knife, and
the system of magnets (17) is disposed on the drum bottom (58) or on the drum rear (59) or on the drum back wall (60) of the housing drum (2a).

2. The forage harvester according to claim 1, **characterized in that** the system of magnets (17) is positioned at a location past which the flow of harvested material (S) flows following its comminution carried out by cooperation of the chopping knives (14) and counter cutter (15).

3. The forage harvester according to claim 1, **characterized in that** the system of magnets (17) is positioned outside the region between the knife drum (13) and the housing drum (2a) through which the flow of harvested material (S) is conveyed away following its comminution.

4. The forage harvester according to one of the preceding claims, **characterized in that** the system of magnets (17) is positioned outside the housing drum (2a) surrounding the knife drum (13).

5. The forage harvester according to one of claims 1 or 2, **characterized in that** the system of magnets (17) is positioned inside the region between the knife drum (13) and housing drum (2a) through which the flow of harvested material (S) is conveyed away following its comminution.

6. The forage harvester according to one of the preceding claims, **characterized in that** the system of magnets (17) does not come into contact with the flow of harvested material (S) before its comminution carried out by cooperation of the chopping knives (14) and counter cutter (15) and/or following its comminution carried out by cooperation of the chopping knives (14) and counter cutter (15).

7. The forage harvester according to one of the preceding claims, **characterized in that** the system of magnets (17) is positioned behind the counter cutter (15) in the direction of rotation of the knife drum (13) and/or vertically beneath the counter cutter (15).

8. The forage harvester according to claim 1, **characterized in that** the housing drum (2a) and/or the drum bottom (58) and/or the drum rear (59) and/or the drum back wall (60) is manufactured from a non-magnetic material.

## Revendications

1. Ensileuse incluant un équipement de détection de tranchant (1) pour détecter le degré de tranchant d'un système de hachage (2) pour le broyage d'un flux de produit récolté (S), le système de hachage (2) comprenant un tambour porte-couteaux (13) avec plusieurs couteaux de hachage (14) ainsi qu'au moins une contre-lame (15) qui coopère avec les couteaux de hachage (14) en broyant le flux de produit récolté (S), le flux de produit récolté (S) étant amené au système de hachage (2) par l'intermédiaire d'une unité de précompression (5), le flux de produit récolté (S) définissant une zone d'arrivée de matière (M) depuis l'unité de précompression (5) jusqu'à l'endroit où les couteaux de hachage (14) coopèrent avec la au moins une contre-lame (15) en broyant le flux de produit récolté (S), l'équipement de détection de tranchant (1) excitant au moins un circuit magnétique (38, 39) au moyen d'un agencement magnétique (17), le circuit magnétique respectif (38, 39) étant fermé par l'intermédiaire du couteau de hachage respectif (14) lors d'une rotation du tambour porte-couteaux (13) dès qu'un des couteaux de hachage (14) passe devant l'agencement magnétique (17), l'équipement de détection de tranchant (1) détectant le flux magnétique dans le circuit magnétique respectif (38, 39) et, sur la base d'une modification détectée d'une grandeur de mesure magnétique relative au flux magnétique, décelant une diminution du degré de tranchant du couteau de hachage respectif (14), l'agencement magnétique (17) étant positionné à l'extérieur de la zone d'arrivée de matière (M) du système de hachage, le système de hachage (2) comportant un tambour-carter (2a) dans lequel le tambour porte-couteaux (13) tourne, le flux de produit récolté (S) étant éloigné de la contre-lame (15) après son broyage provoqué par la coopération de couteaux de hachage (14) et de la contre-lame (15) entre le tambour porte-couteaux (13) et le tambour-carter (2a), le tambour-carter (2a) incluant un fond de tambour (58), un dos de tambour (59) et une paroi arrière de tambour (60), le flux de produit récolté (S) étant dirigé, après son broyage, hors du tambour-carter (2a) vers un canal d'éjection (12) à travers une ouverture prévue entre le fond de tambour (58) et le dos de tambour (59), **caractérisée en ce qu'**au moins une partie du flux magnétique du circuit magnétique (38, 39) fermé par le couteau de hachage respectif (14) est guidée longitudinalement dans le couteau de hachage au moins sur une portion longitudinale (L₁, L₂) du couteau de hachage respectif (14), et l'agencement magnétique (17) est disposé sur le fond de tambour (58) ou sur le dos de tambour (59) ou sur la paroi arrière de tambour (60) du tambour-carter (2a).

2. Ensileuse selon la revendication 1, **caractérisée en ce que** l'agencement magnétique (17) est positionné dans un endroit devant lequel le flux de produit récolté (S) est guidé après son broyage provoqué par la coopération de couteaux de hachage (14) et de la contre-lame (15).

3. Ensileuse selon la revendication 1, **caractérisée en ce que** l'agencement magnétique (17) est positionné à l'extérieur de la zone entre le tambour porte-couteaux (13) et le tambour-carter (2a) à travers laquelle le flux de produit récolté (S) est évacué après son broyage.

4. Ensileuse selon une des revendications précédentes, **caractérisée en ce que** l'agencement magnétique (17) est positionné à l'extérieur du tambour-carter (2a) entourant le tambour porte-couteaux (13).

5. Ensileuse selon une des revendications 1 à 2, **caractérisée en ce que** l'agencement magnétique (17) est positionné à l'intérieur de la zone entre le tambour porte-couteaux (13) et le tambour-carter (2a) à travers laquelle le flux de produit récolté (S) est évacué après son broyage.

6. Ensileuse selon une des revendications précédentes, **caractérisée en ce que** l'agencement magnétique (17) n'entre pas en contact avec le flux de produit récolté (S) avant son broyage provoqué par la coopération de couteaux de hachage (14) et de la contre-lame (15) et/ou après son broyage provoqué par la coopération de couteaux de hachage (14) et de la contre-lame (15).

7. Ensileuse selon une des revendications précédentes, **caractérisée en ce que** l'agencement magnétique (17) est positionné, dans le sens de rotation du tambour porte-couteaux (13), derrière la contre-lame (15) et/ou verticalement au-dessous de la contre-lame (15).

8. Ensileuse selon la revendication 1, **caractérisée en ce que** le tambour-carter (2a) et/ou le fond de tambour (58) et/ou le dos de tambour (59) et/ou la paroi arrière de tambour (60) sont fabriqués dans un matériau non magnétique.
